# EUROPEAN PATENT SPECIFICATION

(11) **EP 4 293 362 B1**
(45) Date of publication and mention of the grant of the patent: **17.09.2025**
(21) Application number: 22179252.6
(22) Date of filing: 15.06.2022
(51) Int. Cl.: G01N 35/10, B01L 3/02, B01L 9/00, A61M 5/32

(54) **A METHOD OF OPERATING A PIPETTING SYSTEM AND A PIPETTING SYSTEM**
VERFAHREN ZUM BETREIBEN EINES PIPETTIERSYSTEMS UND EIN PIPETTIERSYSTEM
PROCÉDÉ PERMETTANT DE FAIRE FONCTIONNER UN SYSTÈME DE PIPETAGE ET SYSTÈME DE PIPETAGE

(43) Date of publication of application: 20.12.2023
(73) Proprietor: TECAN Trading AG, 8708 Männedorf (CH)
(72) Inventor: UEBELHART, François, 8645 Jona SG (CH); ANGST-HELBLING, Marianne, 8046 Zürich (CH); HÄLG, Werner, 8708 Männedorf (CH)
(74) Representative: Troesch Scheidegger Werner AG

(56) References cited:
- EP-A1- 1 785 189
- WO-A1-2010/024906
- WO-A1-2012/069925
- US-A1- 2009 004 063
- US-A1- 2020 254 439

## Description

### TECHNICAL FIELD

The present invention relates to a method of operating a pipetting system, a pipetting system, a tool, in particular a downholding means, a piercing means or a receptacle, and a computer-implemented method.

### PRIOR ART

Pipetting systems are known for automatic liquid handling, e.g. operating on a target. Pipetting systems comprise a worktable, at least one manipulator arm and a plurality of Z-rods arranged on the manipulator arm. So-called disposable tips (DiTi) can be received by means of pipetting cones, which are itself attached to the Z-rods from below by means of e.g. a screw connection. More precisely, disposable tips can be detachably received by means of connecting features provided on the outer surface of said pipetting cones, e.g. on the lower distal end thereof. The connecting features can comprise a bulge which can be engaged by a respective counterpart provided to the disposable tips, such to provide a clip mechanism. Said counterpart can e.g. comprise a torsion spring, an O-ring, etc.

Since the use of disposable tips in continuous operation is expensive and costs are additionally incurred for theirP219051 disposal, fixedly mounted pipette tips or rather fixed tips comprising a needle made of steel can be used. Said fixed tips can be provided with connection parts, fixedly connected to said needle, which can be in turn connected to the Z-rods from below by means of a screw connection. The said connection parts can be provided with grooves on a circumferential section thereof in order to enhance grip while screwing/unscrewing.

The above mentioned target can comprise a reagent vial, a reagent trough, a reagent tube, a microplate, etc. Microplates allow for example performing biological or biochemical tests in which a large number of samples are processed in parallel. As a microplate in the context of the present invention, all multiwell plates are referred to, which have a plurality of wells or containers, which are arranged in an array. Especially preferred microplates have at least approximately the mass and footprint of a SBS standard microplate as published by the American National Standards Institute (ANSI). For example, those standard microplates are known whose wells are equipped with a round bottom, flat bottom or V-bottom. All these standard microplates with the most varied corrugations have in common that the center distance of the wells arranged in an array is also normalized (see ANSI_SBS 1-2-3-4-2004 Standard for Microplate Dimensions from 2006). This center distance is e.g. for 24-well (4 x 6) plates 18 mm, for 96-well (8 x 12) plates 9 mm, for 384-well (16 x 24) plates 4.5 mm and for 1536-well (32 x 48) plates 2.25 mm. The height of a standard microplate can vary widely depending on the type and is typically between 10.4 mm (e.g., 1536 V bottom deep well plate) and 44 mm (e.g., 96 well Masterblock^{®} from Greiner).

Operating on said target is troublesome and prone to error. Said operating can e.g. comprise piercing a membrane comprised by the target from above by means of the fixed tip, introducing the fixed tip into the target, aspirating or dispensing liquid from or rather into the target via the fixed tip, and withdrawing the fixed tip from the target via the piercing. However, at least said step of withdrawing the fixed tip from the target via the piercing is prone to error, since the friction between the needle of the fixed tip and the membrane results in, while lifting the fixed tip, lifting the target, too.

Another problem resides in operating on a target comprising a membrane by means of a disposable tip, since disposable tips lack piercing capacities. Another problem resides in that fixed tips or disposable tips filled with liquid can dispense liquid in droplets while being traversed across the worktable, which can result in contamination.

Document US 9,687,841 B2 discloses a pipetting device for removing fluid from a sample vessel. Said pipetting device includes a pipetting needle and a guide arm. The guide arm comprises an end plate including a centering device provided with centering fingers forming a holding-down device for the sample vessel. Both the pipetting needle and guide arm are arranged in parallel, allowing to be moved in vertical direction, independently. However, the pipetting needle and guide arm are moved in horizontal directions synchronously, thus occupying huge space. Further, the risk of collisions arises. Further, due to the necessity of providing each of the plurality of pipetting needles with a guide arm, costs increase. Further disadvantageously, masses increase, resulting in reduced operational speed or rather throughput.

US 2009/0004063 A1 discloses a programmable robot having at least one syringe actuating device. The actuating device has a holder for holding and releasing a syringe cylinder and an actuator movable relative to the holder. A coupling couples the actuator to the plunger of the syringe such that, when the cylinder is held by the holder, movement of the actuator relative to the holder causes the plunger to move in the cylinder. The plunger is robotically moved in the cylinder to dispense material from the syringe into the container.

WO 2010/024906 A1 discloses an automatic sample solution treatment system including a plurality of tubes each with a slidable plunger to hermitically seal a sample inside, a robotic arm for transporting the tubes, a sonicator horn for accepting the tubes to sonicate the tubes, a plurality of units respectively having piercing members, a gripping mechanism attached to the robotic arm for gripping the tubes so that the tubes can be securely pressed by the robotic arm into the respective units to cause the piercing members of the respective units to pierce the bottom and/or side wall of the tubes and to thereby combine the tubes and the respective units to form single disposable tube devices, vials containing buffers and reagents for the robotic arm to position the disposable tube devices over the vials, and a plunger actuator for moving the plunger of each disposable tube device to draw in the buffer or reagents or to expel fluid such as the sample solutions, buffers and reagents.

WO 2012/069925 A1 discloses a liquid handling android with a hand attached to an arm. The arm generates movement of the hand in space, mainly moving over a two-dimensional surface but also capable of lifting and descending a pipette in order to perform a desired pipette action. The hand comes into contact with the pipette and has the ability of grabbing and depositing pipettes onto a pipette rack. Additionally, the hand can manipulate a pipette knob for the purpose of aspiration and dispensing, is able to perform tip ejection and actuate the pipette for the purpose of setting a desired volume.

US 2020/0254439 A1 discloses a hollow needle for a sample pipettor in a device for laboratory automation, in particular for taking sample liquid from a sealed sample vessel, wherein for taking the sample liquid the seal of the sample vessel is pierced with the hollow needle. Sample liquids can also be dispensed into sample containers with a cap, wherein the hollow needle pierces the cap before dispensing the sample liquid.

EP 1 785 189 A1 discloses a device for catching drops from a pipette mechanically attached to a pipetting device, wherein said device for catching drops is moveable to a position below an opening of said pipette and the movement of said device for catching drops is functionally or/and mechanically coupled to the movement of said pipetting device. The drop catching device is made up of a frame comprising at least one passive guidance, an adjustable mounting, and a drop catcher container. The passive guidance forms a means for mechanically coupling the drop catching device to the pipetting device. The adjustable mounting is located at a first and upper end of the drop catching device and functions as a means for fixing the drop catching device to the mounting surface carrying the pipetting device.

### DESCRIPTION OF THE INVENTION

An object of the present invention is to provide a method of operating a pipetting system as well as in providing a pipetting system in which problems in the state of the art are eliminated. In particular, an object of the present invention is to provide a method of operating a pipetting system as well as in providing a pipetting system in which space and costs are reduced, safety is increased, operational speed or rather throughput is increased.

This object is solved by a method of operating a pipetting system having the features of claim 1, and by a pipetting system having the features of claim 12. Further embodiments are defined by the features of further claims.

According to the invention, provided is a method of operating a pipetting system comprising a worktable, at least one manipulator arm and a plurality of Z-rods arranged on the at least one manipulator arm, wherein said plurality of Z-rods comprise a first Z-rod and a second Z-rod, wherein said first Z-rod comprises a fixed tip or a disposable tip attached to said first Z-rod via a connecting feature, wherein the first Z-rod comprises a Z-axis defined along a central axis of the fixed tip or disposable tip. Said method comprises the step of:
- receiving by said second Z-rod a tool via an adapter attached to said second Z-rod, wherein said tool comprises a central axis and a working area, said working area being defined by a circle which center is located on the central axis of said tool and which radius being a distance between said central axis and a largest extension of an outline of the tool in a projection.

The method further comprises the steps of:
- traversing the Z-rods such that the working area of the respective tool is penetrated orthogonally by the Z-axis of the first Z-rod, as viewed in longitudinal direction of said first Z-rod,
- operating on the fixed tip or disposable tip of the first Z-rod by means of the tool of the second Z-rod,
- putting aside the tool received by the second Z-rod on a docking station subsequent to operation,
   or
- traversing the Z-rods such that the Z-axis of the first Z-rod and the working area of the respective tool, as viewed in longitudinal direction of said first Z-rod, at least partially overlap a target area comprised by a target operable by means of the tool of the second Z-rod,
- operating on the target by means of the tool of the second Z-rod and/or by means of the fixed tip or the disposable tip of the first Z-rod,
- putting aside the tool received by the second Z-rod on a docking station subsequent to operation.

Such method provides the following advantages:
The method allows receiving a tool solely if the necessity of operating on a target in collaboration with a fixed tip or disposable tip arises. Otherwise, the tool can be placed on hold or rather in standby position on an e.g. nearby docking station. Further, only as many tools are used as necessary, resulting in reduced deployment of tools. In other words, the invention allows the provision of a reduced number of tools while still allowing operating on one or more targets in a collaboration between a tool and a fixed tip or disposable tip. Further, space can be reduced. Furthermore, advantageously, an increased number of Z-rods can be equipped with fixed tips or disposable tips, which results in an increased throughput or rather performance of the pipetting system. Further, fixed tips already mounted on a respective Z-rod can remain in place or rather on standby, since the tool is received on a surrounding thereof. Further, due to the provision of a reduced number of tools, costs can be reduced. Furthermore, maintenance can be reduced. Further advantageously, less masses have to be moved, resulting at least in more precision and speed. Furthermore, the risk of mutual interference or rather collision between equipment is reduced.

In an embodiment of the method, the tool is a downholding means. The target can be a reagent vial, which is closed or rather sealed on the top by a membrane which can be pierced by a fixed tip. The target can be a microplate with sealed wells by a sealing film or adhesive metal foil. In case of a pierced vial, the downholding means acts on the vial such to remain in place even if the fixed tip is lifted or rather withdrawn across the piercing from the vial. In other words, the downholding means prevents lifting of the vial in the course of withdrawing the fixed tip.

In an embodiment of the method, operating on the target comprises abutting the target from above by means of the downholding means such to fix the target in relation to the worktable. In an example, a respective target can be received in a carrier. In this example, abutting the target from above by means of the downholding means allows to fix the target in relation to the carrier, which in turn is fixed in relation to the worktable. In the context of the invention, fixing the target in relation to the worktable may involve further, intermediate, components, such as e.g. a carrier for receiving the target.

In an embodiment of the method, operating on the target comprises:
- piercing a membrane comprised by the target from above by means of the fixed tip,
- introducing the fixed tip at least partially into the target via the piercing,
- aspirating or dispensing liquid from or rather into the target via the fixed tip.

In an embodiment of the method, operating on the target comprises withdrawing the fixed tip from the target via the piercing while still abutting the target from above by means of the downholding means.

In an embodiment of the method, the tool is a piercing means comprising a central opening.

In an embodiment of the method, operating on the target comprises piercing a membrane comprised by the target from above by means of the piercing means such to provide the membrane with an opening. The invention allows operating on a target, which can be closed to the top via a membrane, by means of a disposable tip. This presents a surprisingly effect, since disposable tips lack piercing capacities.

In an embodiment of the method, operating on the target comprises:
- introducing the disposable tip or fixed tip at least partially into the target via the opening or via the central opening of the piercing means,
- aspirating or dispensing liquid from or rather into the target via the disposable tip or fixed tip,
- withdrawing the disposable tip or fixed tip from the target via the opening or via the central opening of the piercing means.

In an embodiment of the method, the tool is a receptacle comprising a drip catcher. In an embodiment of the method, operating on the fixed tip or disposable tip of the first Z-rod comprises traversing the second Z-rod such to place the drip catcher of the receptacle beneath the fixed tip or disposable tip. The invention allows to catch liquid or rather liquid in droplets, which could drop from fixed tips or disposable tips. This can be achieved even in the course of traversing across the worktable. Therefore, contamination of e.g. further liquids, samples, assays, etc., due to droplets can be prevented.

In an embodiment the method further comprises traversing the first Z-rod across the worktable and further traversing the second Z-rod in parallel movement to the movement of the first Z-rod such to continuously place the drip catcher of the receptacle beneath the fixed tip or disposable tip.

According to the invention, provided is a pipetting system comprising a worktable, at least one manipulator arm and a plurality of Z-rods arranged on the at least one manipulator arm. Said plurality of Z-rods comprise a first and second Z-rods, said first Z-rod comprises a fixed tip or comprises a disposable tip attached to said first Z-rod via a connecting feature, wherein the first Z-rod comprises a Z-axis defined along a central axis of the fixed tip or disposable tip.

The pipetting system is operable of:
- receiving by said second Z-rod a tool via an adapter attached to said second Z-rod, wherein said tool comprises a central axis and a working area, said working area being defined by a circle which center is located on the central axis of said tool and which radius being a distance between said central axis and a largest extension of an outline of the tool in a projection.

The method further comprises the steps of:
- traversing the Z-rods such that the working area of the respective tool is penetrated orthogonally by the Z-axis of the first Z-rod, as viewed in longitudinal direction of said first Z-rod,
- operating on the fixed tip or disposable tip of the first Z-rod by means of the tool of the second Z-rod,
- putting aside the tool received by the second Z-rod on a docking station subsequent to operation,
   or
- traversing the Z-rods such that the Z-axis of the first Z-rod and the working area of the respective tool, as viewed in longitudinal direction of said first Z-rod, at least partially overlap a target area comprised by a target operable by means of the tool of the second Z-rod,
- operating on the target by means of the tool of the second Z-rod and/or by means of the fixed tip or the disposable tip of the first Z-rod,
- putting aside the tool received by the second Z-rod on a docking station subsequent to operation.

In an embodiment of the pipetting system, the tool comprises a downholding means, a piercing means or a receptacle. The target can be one of a reagent vial, a reagent trough and a reagent tube. Further, in an embodiment of the pipetting system, said tool comprises a downholding means or a piercing means. There is provided a computer-implemented method for controlling at least one manipulator arm with at least two Z-rods of a pipetting system.

It is expressly pointed out that any combination of the above-mentioned embodiments is subject of further possible embodiments. Only those embodiments are excluded that would result in a contradiction.

### BRIEF DESCRIPTION OF THE FIGURES

Exemplary embodiments of the present invention are explained in further detail hereinafter with references to the figures. These merely serve for explanation and should not be interpreted as restrictive. In the figures
Fig. 1 shows a pipetting system according to the invention in a perspective view;
Fig. 2A shows an arrangement of two consecutive Z-rods according to a first embodiment in two different perspective views;
Fig. 2B shows schematically a sectional view I-I of an abutment of a tool as shown in Fig. 2A;
Fig. 3 shows the two consecutive Z-rods as shown in Fig. 2A in a front view;
Fig. 4A shows an arrangement of two consecutive Z-rods according to a second embodiment in two different perspective views;
Fig. 4B shows schematically a sectional view I-I of a piercer of a tool as shown in Fig. 4A;
Fig. 5 shows the two consecutive Z-rods as shown in Fig. 4A in a front view;
Fig. 6 shows in a sectional view the two consecutive Z-rods as shown in Figs. 4A and 5 operating on a target;
Fig. 7A shows an arrangement of two consecutive Z-rods according to a third embodiment in two different perspective views;
Fig. 7B shows schematically a sectional view I-I of a drip catcher of a tool as shown in Fig. 7A; and
Fig. 8 shows the two consecutive Z-rods as shown in Fig. 7A in a front view.

### DETAILED DESCRIPTION OF THE INVENTION

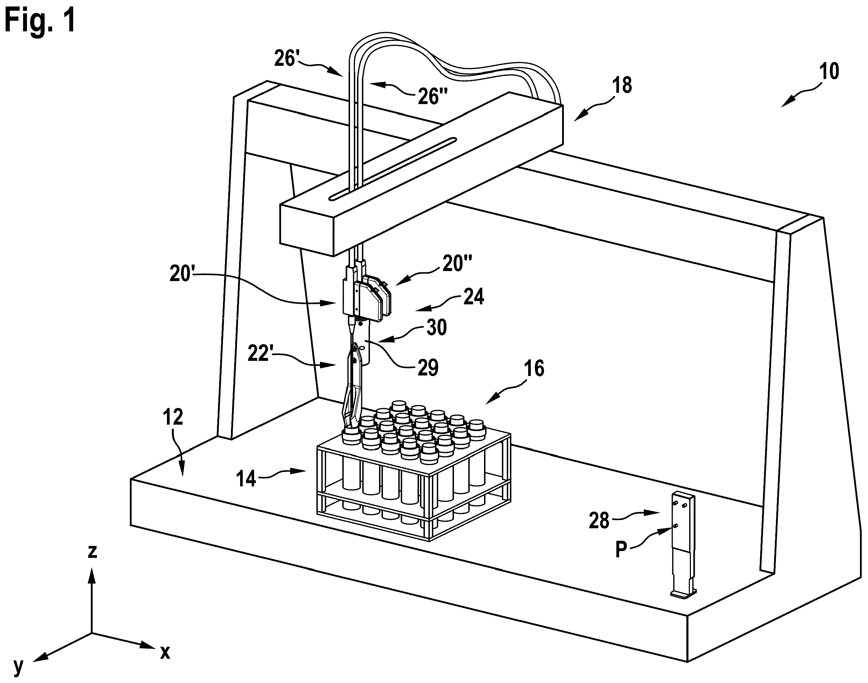

Fig. 1 schematically shows a pipetting system 10 according to the invention in a perspective view. The depicted pipetting system 10 comprises a worktable 12 aligned in a X-Y plane. The worktable 12 supports a carrier 14, which itself receives a plurality of targets 16, e.g. in four rows of each five targets 16. The targets 16 can e.g. comprise a reagent vial, a reagent trough, a reagent tube, a microplate, etc.

The pipetting system 10 further comprises a manipulator arm 18 which can be moved ahead of the worktable 12 along the X-direction. The manipulator arm 18 supports two Z-rods 20',20'', which are shown arranged in succession, both elongated in Z-direction. The two Z-rods 20',20'' itself can be driven along the manipulator arm 18 in Y-direction. In doing so, the Z-rods 20',20'' can be transferred such that projections thereof can reach nearly every position on the worktable 12. Lower ends of the Z-rods 20',20'' are configured to receive a respective means, to be explained in the following. The lower ends of the Z-rods 20',20'' can be individually driven upwards or downwards via e.g. a respective gear rack drive. The two Z-rods 20',20'' are shown arranged along the manipulator arm 18 side by side. However, while not shown, the two Z-rods 20',20'' can be arranged on the manipulator arm 18 such to be spaced apart from each other via one or more further Z-rods interposed between the two Z-rods 20',20''. Further, while not shown, the pipetting system 10 can comprise more than one manipulator arm. In the example not being part of the present invention, the pipetting system comprises more than one manipulator arm, the two Z-rods 20',20'' can be arranged on different manipulator arms, e.g. adjacent manipulator arms.

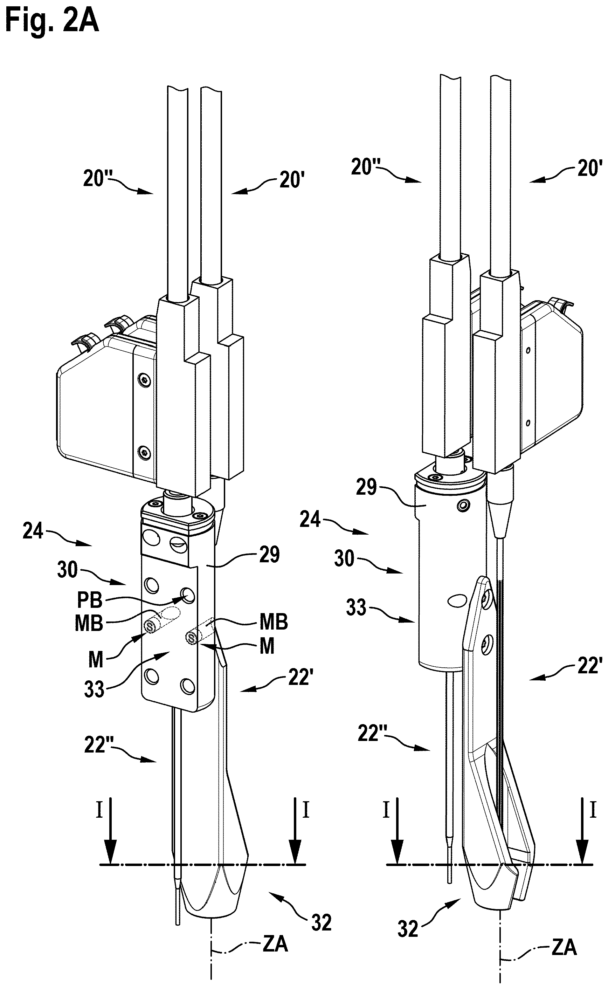

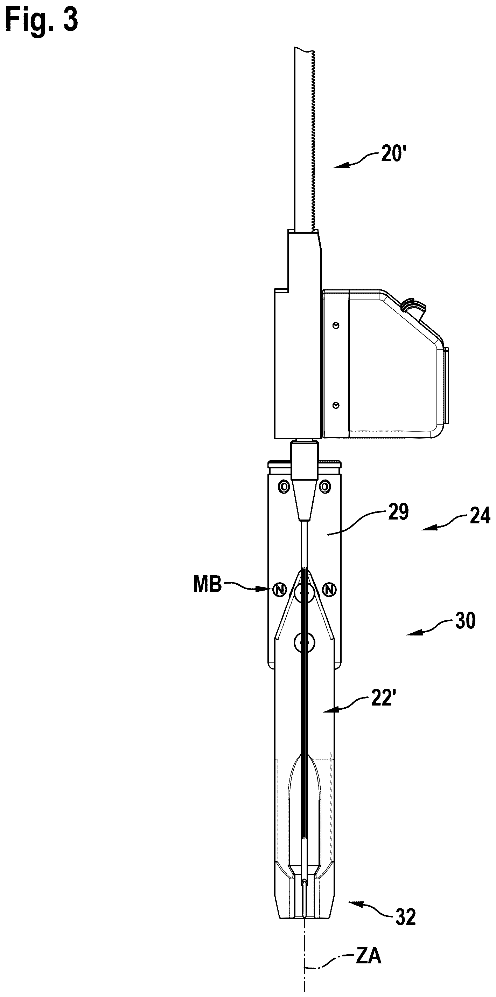

The first Z-rod 20' is equipped with a fixed tip 22'. The second Z-rod 20'' is equipped with a fixed tip 22'' (refer to Figs. 2A and 3) as well as with a tool 24, e.g. a downholding means, to be explained in further detail in the following. Each of the fixed tips 22',22'' is configured for aspirating or dispensing liquid from or into e.g. one of the targets 16. Respective liquids are aspirated by applying vacuum via hoses 26',26'' and liquids are dispensed by applying pressure via the hoses 26',26''. The hose 26',26'' connects fluidically the fixed tip 22',22'' to a vacuum/pressure source, e.g. a syringe pump.

The pipetting system 10 further comprises at least one docking station 28, which is arranged on the worktable 12. The docking station 28 is configured to receive the tool 24 via a coupling 29 comprised by the respective tool 24. The coupling 29 can comprise position bores arranged such to correspond to pins P comprised by the docking station 28, to be explained in further detail in the following. In doing so, the tool 24 can be attached or rather pinned to the docking station 28 laterally such to achieve a positive connection in at least vertical direction. In this situation, the second Z-rod 20'' can be moved upwards, resulting in a separation of the tool 24 from the second Z-rod 20'' while the tool 24 remains attached or rather pinned to the docking station 28.

The tool 24 can be placed or rather stored on the docking station 28 as far as not required for operation. In this case, the second Z-rod 20'' can be used ordinary, e.g. for liquid handling. The docking station 28 can receive two tools 24 in a back-to-back manner. Further, several docking stations 28 can be arranged next to one another on the worktable 12. In order to avoid an undesired lateral slippage of the tool(s) 24 from the docking station 28, both can be magnetic or magnetizable and at least one of the two elements comprises a permanent magnet, to be explained in further detail in the following.

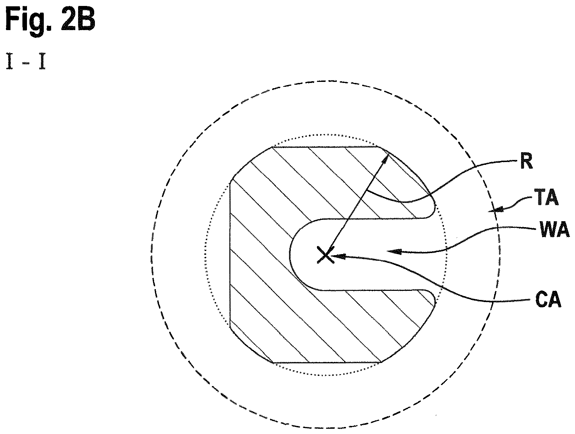

Fig. 2A shows, in a first embodiment, an arrangement of two consecutive Z-rods 20',20'' as shown in Fig. 1 in two different perspective views (rotated to each other by an angle of 90°), Fig. 2B is a schematically, sectional view I-I (as seen from above) of an abutment 32 of the tool 24 as seen in Fig. 2A, and Fig. 3 is a front view of the two consecutive Z-rods 20',20'' in the first embodiment.

While the first Z-rod 20' is shown equipped with the fixed tip 22', the second Z-rod 20'' is shown equipped with the fixed tip 22'' and the tool 24. The second Z-rod 20'' receives the tool 24 by its coupling 29 via an adapter attached to said second Z-rod 20'', to be described in further detail in the following. Advantageously, no further modification on one of the Z-rods 20',20'' is required - the tool 24, via it's coupling 29, is simply detachably received by the second Z-rod 20'' by means of e.g. a clip-mechanism. Therefore, in the shown case, the fixed tip 22'', which is already mounted on the second Z-rod 20'', can remain in place or rather on standby, since the tool 24 is received on a surrounding thereof. Hence, only as many tools are used as necessarily required for a respective operation, resulting in reduced deployment of tools. Further advantageously, an increased number of Z-rods can be equipped with fixed tips, which results in an increased throughput or rather performance of the pipetting system.

In the shown example, the tool 24 comprises a downholding means 30. The downholding means 30 is configured to abut the target from above such to fix the target in relation to the worktable (refer to Fig. 1). In doing so, operating on the target is at least enhanced and secured. Operating on the target can comprise: piercing a membrane or a rubber stopper comprised by the target from above by means of the fixed tip 22' mounted on the first Z-rod 20', introducing said fixed tip 20' at least partially into the target via the piercing, and aspirating or dispensing liquid from or rather into the target via said fixed tip 20'. Afterwards, said fixed tip 20' can be withdrawn from the target via the piercing while still abutting the target from above by means of the downholding means 30.

The both Z-rods 20',20'' perform a collaborative interaction: while the second Z-rod 20'', via the downholding means 30, abuts the target from above in order to securely fix it in relation to the worktable, the first Z-rod 20' performs steps which can e.g. comprise ordinary liquid handling steps.

The downholding means 30 comprises an abutment 32, which, at least in a bottom portion thereof, can be formed U-like or rather horseshoe-like. This design allows lateral passage or rather entrance of the fixed tip 22' to a substantially central portion of the bottom portion, substantially surrounded by the abutment 32. While not shown, the abutment 32, at least in the bottom portion thereof, can be formed ring-like. In this design, the two Z-rods 20',20'' have to be moved vertically in relation to each other such to allow traversal of the fixed tip 22' above the ring to a substantially central portion of the ring, wherein such traversal is performed by horizontally moving the two Z-rods 20',20'' in relation to each other.

The first Z-rod 20' comprises a Z-axis ZA defined along a central axis of the fixed tip 22'. The abutment 32 of the downholding means 30 in turn comprises a central axis CA and a working area WA, as best seen in Fig. 2B. Said working area WA is defined by a circle (schematically indicated by a dotted circle) which center is located on the central axis CA of the abutment 32 of the downholding means 30 and which radius R being a distance between said central axis CA and a largest extension of an outline of the abutment 32 of the downholding means 30 in a projection.

The Z-rods 20',20'' can be traversed such that the Z-axis ZA of the first Z-rod 20' and the working area WA of the abutment 32 of the downholding means 30, as viewed in longitudinal direction of said first Z-rod 20', at least partially overlap a target area TA (schematically indicated by a dashed circle) comprised by the target operable by means of the abutment 32 of the downholding means 30 of the second Z-rod 20''. This allows operating on the target by means of the abutment 32 of the downholding means 30 of the second Z-rod 20'' (fixing the target in relation to the worktable) and/or by means of the fixed tip 22' of the first Z-rod 20' (penetrating the membrane of the target, aspirating/dispensing liquid, etc.).

In case of further operation with the downholding means 30 is no longer required, the downholding means 30 can be simply set aside on the docking station 28 (refer to Fig. 1). In doing so, the body of the coupling 29 can comprise a holding device 33 with a recess arranged laterally to the body of the coupling 29. With the holding device 33 the coupling 29 can be arranged or rather attached to the docking station 28 (refer to Fig. 1) provided for this purpose. For example, two tools 24 can be arranged on the docking station 28 in a back-to-back manner. The recess can comprise the above-mentioned position bores PB, wherein these can be arranged distributed regularly over the recess. For example, four position bores can be arranged in a rectangle. The docking station 28 can comprise e.g. three pins P (refer to Fig. 1), which can be arranged such to correspond three of the four position bores PB drilled into the coupling 29.

The body of the coupling 29 can comprises magnet bores MB which extend substantially perpendicular to the recess and in which magnets M are arranged at a distance from the recess. For example, the magnet bores MB are arranged on the opposite side of the holding device 33 and end at a distance from the recess of the holding device 33. The magnets M can be cylindrical permanent magnets which are let into the magnet bores MB. The docking station 28 (refer to Fig. 1) can comprise a magnetic element with the result that an additional holding force is obtained together with the magnets M of the coupling 29.

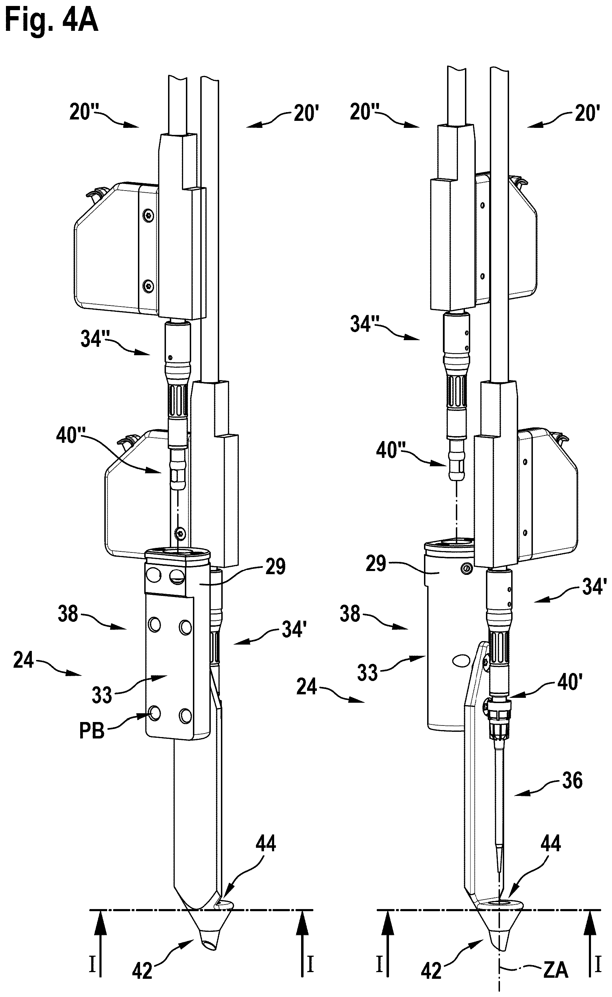

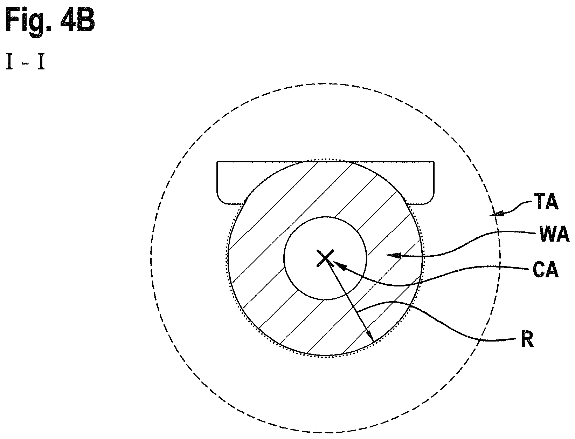

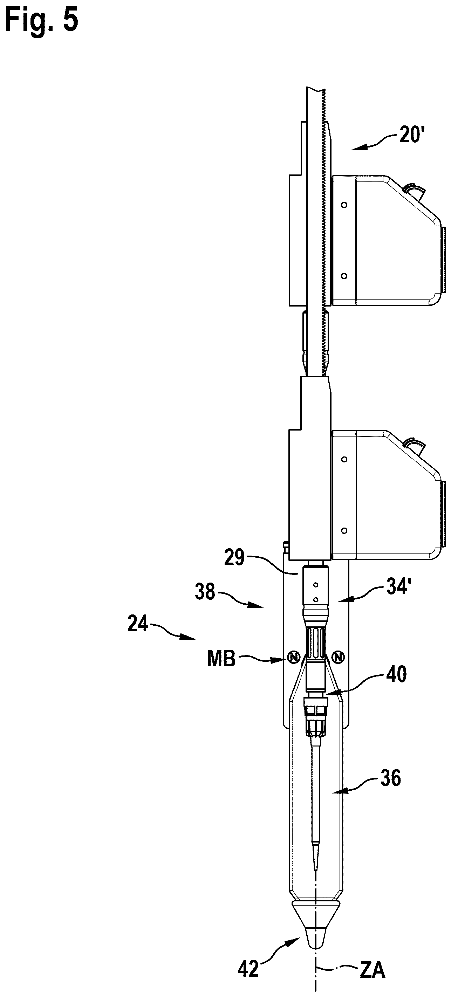

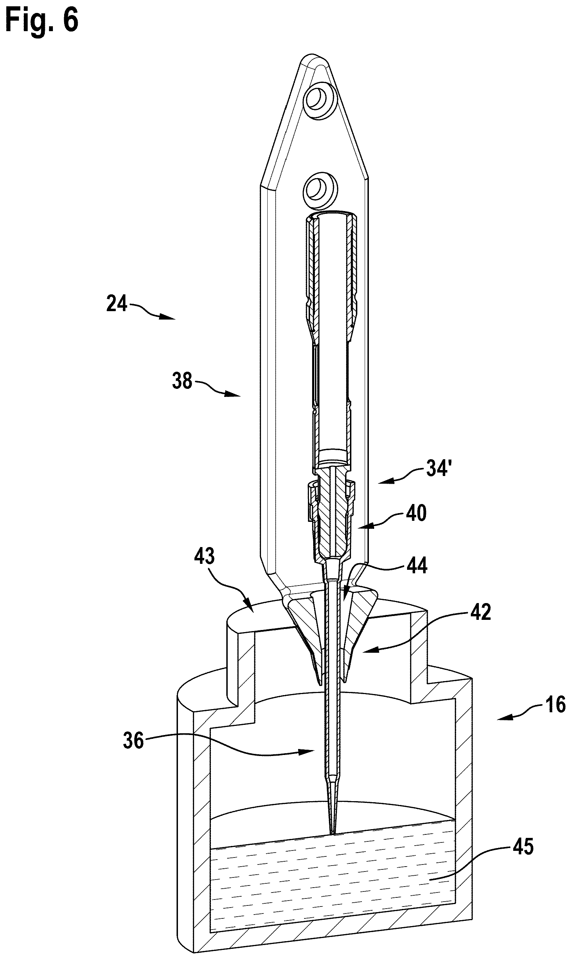

Fig. 4A shows an arrangement of two consecutive Z-rods 20',20'', exemplified in a second embodiment, in two different perspective views (rotated to each other by an angle of 90°), Fig. 4B is a schematically, sectional view I-I (as seen from below) of a piercer 44 of the tool 24 as seen in Fig. 4A, and Fig. 5 is a front view of the two consecutive Z-rods 20',20'' in the second embodiment in a front view. Fig. 6 shows in a sectional view the tool 24 and the adapter 34' with a disposable tip 36 (the two Z-rods 20',20'' not shown) collaboratively operating on the target 16.

The first Z-rod 20' is equipped with an adapter 34' comprising a connecting feature 40', which, via its distal end, receives a disposable tip 36. The second Z-rod 20'' is equipped with an adapter 34'', too, comprising a connecting feature 40'', which, via its distal end, receives the tool 24, which in the shown example is embodied as a piercing means 38.

The adapters 34',34'' can be connected to the Z-rods 20',20'' via e.g. a screw connection. The distal ends of the adapters 34',34'' are provided with the connecting features 40',40'', respectively, which can comprise one or more bulges. The disposable tip 36 as well as the piercing means 38 can be attached to the adapters 34',34'', respectively, simply by means of a clip mechanism. For fetching disposable tips, the connecting feature 40',40'' acts as pipetting cones. In an example, the disposable tip 36 and/or the piercing means 38 can be provided with an elastomer material (not shown), which can lock or rather snuggly fit to the bulge. In an example, the elastomer material can comprise an O-ring or a torsion spring, which can click into place by simply being transferred in upward direction across the bulge. In an example, the connecting feature 40',40'' can comprise a notch. The elastomer material can simply snap into the notch.

The distal end of the piercing means 38 is provided with a circular piercer 42, which is formed chamfered in downward direction. Pushing the piercer 42 from above to a membrane 43 of the target 16 results in piercing the membrane 43 such to provide thereof with an opening. The piercer 42 is provided with a central opening 44, which allows passage of the disposable tip 36 affixed to the first Z-rod 20'.

The shown embodiment allows piercing the membrane 43 from above by means of the piercer 42 of the piercing means 38 such to provide the membrane 43 with an opening. Subsequently, the disposable tip 36 comprised by the first Z-rod 20' can be introduced at least partially into the target 16 via the thus created opening or rather via the central opening 44 of the piercing means 38, such to reach a liquid 45 filled into the target 16. Said liquid 45 can be aspirated from the target 16 via the disposable tip 36. Otherwise, a liquid can be dispensed into the target 16. Afterwards, the disposable tip 36 can be withdrawn from the target 16 via the opening or via the central opening 44 of the piercing means 38.

Advantageously, this embodiment allows to operate on the target 16, which is provided with or rather sealed by the membrane 43, by means of the disposable tip 36, which distal end is rather formed blunt and otherwise unsuitable for piercing. Further advantageously, said operation can be performed rapidly, by allowing passage of the disposable tip 36 (comprised by the first Z-rod 20') through the central opening 44 of the piercer 42 of the piercing means 38 (comprised by the second Z-rod 20''). The steps of piercing the membrane 43 and introducing the disposable tip 36 can be performed almost simultaneously, thus allowing an increased throughput. The inventive collaborative interaction between the two Z-rods 20',20'' provides improvements which are unknown so far.

The first Z-rod 20' comprises a Z-axis ZA defined along a central axis of the disposable tip 36. The piercer 42 of the piercing means 38 in turn comprises a central axis CA and a working area WA, as best seen in Fig. 4B. Said working area WA is defined by a circle (schematically indicated by a dotted circle) which center is located on the central axis CA of the piercer 42 of the piercing means 38 and which radius R being a distance between said central axis CA and a largest extension of an outline of the piercer 42 of the piercing means 38 in a projection.

The Z-rods 20',20'' can be traversed such that the Z-axis ZA of the first Z-rod 20' and the working area WA of the piercer 42 of the piercing means 38, as viewed in longitudinal direction of said first Z-rod 20', at least partially overlap a target area TA (schematically indicated by a dashed circle) comprised by the target 16 operable by means of the piercer 42 of the piercing means 38 of the second Z-rod 20''. This allows operating on the target by means of the piercing means 38 of the second Z-rod 20'' (piercing the membrane 43 from above) and/or by means of the disposable tip 36 of the first Z-rod 20' (introducing the disposable tip 36 at least partially into the target 16 via the opening, aspirating or dispensing liquid, etc.).

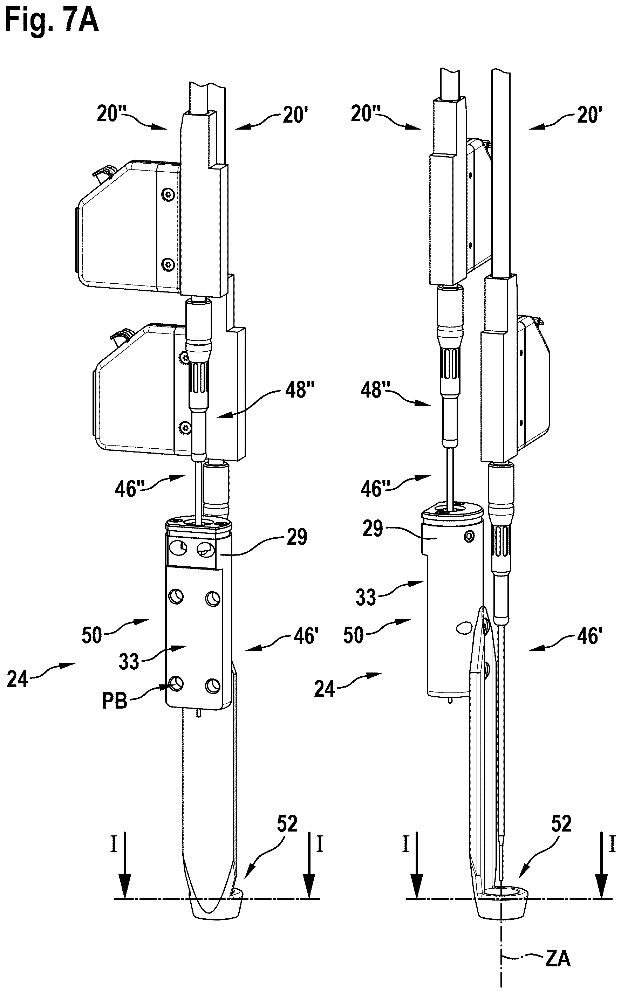

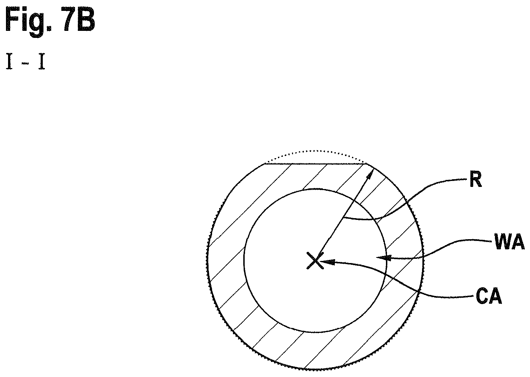

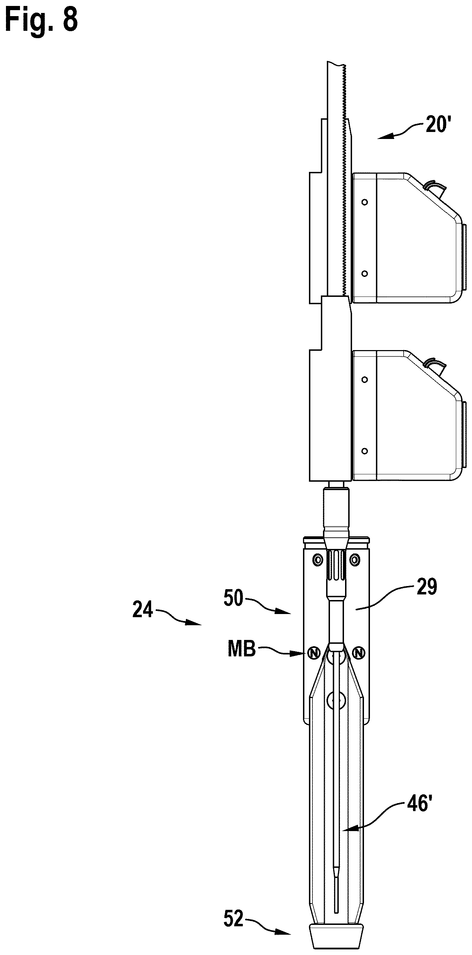

Figs. 7A shows an arrangement of two consecutive Z-rods 20',20'', exemplified in a third embodiment, in two different perspective views (rotated to each other by an angle of 90°), Fig. 7B is a schematically, sectional view I-I (as seen from above) of a drip catcher 52 of the tool 24 as seen in Fig. 7A, and Fig. 8 is a front view of the two consecutive Z-rods 20',20'' in the third embodiment.

The first Z-rod 20' is equipped with a fixed tip 46'. The second Z-rod 20'' is equipped with a fixed tip 46'', as well. Both fixed tips 46',46'' can be attached to the Z-rods 20',20'' by means of a screw connection. Both, the first and second fixed tips 46',46'' comprise a connecting feature 48',48'', which can comprise a bulge formed at a lower end thereof. The second Z-rod 20'' is schematically shown to receive the tool 24, which is configured as a receptacle 50.

The receptacle 50 can be attached to the connecting feature 48'' simply by means of a clip mechanism. In an example, the clip mechanism can be provided by an elastomer material (not shown), which can lock or rather snuggly fit to the bulge. In an example, the elastomer material can comprise an O-ring or a torsion spring, which can click into place by simply being transferred in direction to the above across the bulge. In an example, the connecting feature 48',48'' can comprise a notch. The elastomer material can simply snap into the notch.

The receptacle 50 comprises a drip catcher 52, adapted to receive or rather catch drips which might drip from the first fixed tip 46'. In doing so, the first and second Z-rods 20',20'' are traversed in relation to each other - or rather collaboratively - such to place the drip catcher 52 beneath the first fixed tip 46'. Hence, collaborative interaction between the first and second Z-rods 20',20'' allows to prevent that droplets, which might probably drip from the distal end of the first fixed tip 46', might drop into further liquids, which might be filled in respective containers provided on the worktable. Hence, the risk of contamination of further liquids is highly reduced.

The first Z-rod 20' comprises a Z-axis ZA defined along a central axis of the first fixed tip 46'. The drip catcher 52 of the receptacle 50 in turn comprises a central axis CA and a working area WA, as best seen in Fig. 7B. Said working area WA is defined by a circle (schematically indicated by a dotted circle) which center is located on the central axis CA of the drip catcher 52 of the receptacle 50 and which radius R being a distance between said central axis CA and a largest extension of an outline of the drip catcher 52 of the receptacle 50 in a projection.

The Z-rods 20',20'' can be traversed such that the working area WA of the drip catcher 52 of the receptacle 50 is penetrated orthogonally by the Z-axis ZA of the first Z-rod 20', as viewed in longitudinal direction of said first Z-rod 20'. This allows operating on the first fixed tip 22' of the first Z-rod 20' by means of the drip catcher 52 of the receptacle 50 of the second Z-rod 20''. Operating on the fixed tip 22' of the first Z-rod 20' can comprise traversing the second Z-rod 20'' such to place the drip catcher 52 of the receptacle 50 beneath the fixed tip 22'. Said operating can further comprise traversing the first Z-rod 20' across the worktable 12 and further traversing the second Z-rod 20'' in parallel movement to the movement of the first Z-rod 20' such to continuously place the drip catcher 52 of the receptacle 50 beneath the fixed tip 22'.

Those skilled in the art will be able to integrate or combine different embodiments or examples and features of different embodiments or examples described herein as long as they do not contradict each other.

### REFERENCE SIGNS LIST

- 10: pipetting system
- 12: worktable
- 14: carrier
- 16: target
- 18: manipulator arm
- 20',20": Z-rod
- 22',22": fixed tip
- 24: tool
- 26' ,26": hose
- 28: docking station
- 29: coupling
- 30: downholding means (as tool 24)
- 32: abutment
- 33: holding device
- 34',34": adapter
- 36: disposable tip
- 38: piercing means (as tool 24)
- 40',40": connecting feature
- 42: piercer
- 43: membrane
- 44: central opening
- 45: liquid
- 46',46": fixed tip
- 48',48": connecting feature
- 50: receptacle (as tool 24)
- 52: drip catcher
- CA: Central Axis
- M: Magnet
- MB: Magnet Bore
- P: Pin
- PB: Position Bore
- R: Radius of Working Area
- TA: Target Area
- WA: Working Area
- ZA: Z-Axis

## Claims

1. A method of operating a pipetting system (10) comprising a worktable (12), at least one manipulator arm (18) and a plurality of Z-rods (20',20'') arranged on the at least one manipulator arm (18), said plurality of Z-rods (20',20'') comprising a first Z-rod (20') and a second Z-rod (20''), said first Z-rod (20') comprising a fixed tip (22';46') or a disposable tip (36) attached to said first Z-rod (20') via a connecting feature (40'), wherein the first Z-rod (20') comprises a Z-axis (ZA) defined along a central axis of the fixed tip (22';46') or disposable tip (36),
said method comprising the step of:
- receiving by said second Z-rod (20'') a tool (24) via an adapter (34'') attached to said second Z-rod (20''), wherein said tool (24) comprises a central axis (CA) and a working area (WA), said working area (WA) being defined by a circle which center is located on the central axis (CA) of said tool (24) and which radius (R) being a distance between said central axis (CA) and a largest extension of an outline of the tool (24) in a projection,
and said method further comprising either the steps of:
- traversing the first and second Z-rods (20',20'') such that the working area (WA) of the tool (24) is penetrated orthogonally by the Z-axis (ZA) of the first Z-rod (20'), as viewed in longitudinal direction of said first Z-rod (20'),
- operating on the fixed tip (22';46') or disposable tip (36) of the first Z-rod (20') by means of the tool (24) of the second Z-rod (20''),
- putting aside the tool (24) received by the second Z-rod (20'') on a docking station (28) subsequent to said operating on the fixed tip (22';46') or disposable tip (36),
or the steps of:
- traversing the first and second Z-rods (20',20'') such that the Z-axis (ZA) of the first Z-rod (20') and the working area (WA) of the tool (24), as viewed in longitudinal direction of said first Z-rod (20'), at least partially overlap a target area (TA) comprised by a target (16) operable by means of the tool (24) of the second Z-rod (20''),
- operating on the target (16) by means of the tool (24) of the second Z-rod (20'') and/or by means of the fixed tip (22';46) or the disposable tip (36) of the first Z-rod (20'),
- putting aside the tool (24) received by the second Z-rod (20'') on a docking station (28) subsequent to said operating on the target (16).

2. The method according to claim 1, wherein the tool (24) is a downholding means (30).

3. The method according to claim 2, wherein operating on the target (16) comprises abutting the target (16) from above by means of the downholding means (30) such to fix the target (16) in relation to the worktable (12).

4. The method according to claim 2 or 3, wherein operating on the target (16) comprises:
- piercing a membrane (43) comprised by the target (16) from above by means of the fixed tip (22'),
- introducing the fixed tip (22') at least partially into the target (16) via the piercing,
- aspirating or dispensing liquid (45) from or rather into the target (16) via the fixed tip (22').

5. The method according to claim 4, wherein operating on the target (16) comprises withdrawing the fixed tip (22') from the target (16) via the piercing while still abutting the target (16) from above by means of the downholding means (30).

6. The method according to claim 1, wherein the tool (24) is a piercing means (38) comprising a central opening (44).

7. The method according to claim 6, wherein operating on the target (16) comprises piercing a membrane (43) comprised by the target (16) from above by means of the piercing means (38) such to provide the membrane (43) with an opening.

8. The method according to claim 7, wherein operating on the target (16) comprises:
- introducing the disposable tip (36) or fixed tip (22';46') at least partially into the target (16) via the opening or via the central opening (44) of the piercing means (38),
- aspirating or dispensing liquid (45) from or rather into the target (16) via the disposable tip (36) or fixed tip (22';46'),
- withdrawing the disposable tip (36) or fixed tip (22',46') from the target via the opening or via the central opening (44) of the piercing means (38).

9. The method according to claim 1, wherein the tool (24) is a receptacle (50) comprising a drip catcher (52).

10. The method according to claim 9, wherein operating on the fixed tip (22',46') or disposable tip (36) of the first Z-rod (20') comprises traversing the second Z-rod (20'') such to place the drip catcher (52) of the receptacle (50) beneath the fixed tip (22',46') or disposable tip (36).

11. The method according to claim 10, further comprising traversing the first Z-rod (20') across the worktable (12) and further traversing the second Z-rod (20") in parallel movement to the movement of the first Z-rod (20') such to continuously place the drip catcher (52) of the receptacle (50) beneath the fixed tip (22',46') or disposable tip (36).

12. A pipetting system (10) comprising a worktable (12), at least one manipulator arm (18) and a plurality of Z-rods (20',20'') arranged on the at least one manipulator arm (18), said plurality of Z-rods (20',20'') comprising a first Z-rod (20') and a second Z-rod (20''), said first Z-rod (20') comprising a fixed tip (22';46') or a disposable tip (36) attached to said first Z-rod (20') via a connecting feature (40'), wherein the first Z-rod (20') comprises a Z-axis (ZA) defined along a central axis of the fixed tip (22';46') or disposable tip (36),
wherein the pipetting system (10) is adapted to:
- receiving by said second Z-rod (20'') a tool (24) via an adapter (34'') attached to said second Z-rod (20''), wherein said tool (24) comprises a central axis (CA) and a working area (WA), said working area (WA) being defined by a circle which center is located on the central axis (CA) of said tool (24) and which radius (R) being a distance between said central axis (CA) and a largest extension of an outline of the tool (24) in a projection,
and wherein the pipetting system (10) is further adapted to either:
- traversing the first and second Z-rods (20',20'') such that the working area (WA) of the tool (24) is penetrated orthogonally by the Z-axis (ZA) of the first Z-rod (20'), as viewed in longitudinal direction of said first Z-rod (20'),
- operating on the fixed tip (22';46') or disposable tip (36) of the first Z-rod (20') by means of the tool (24) of the second Z-rod (20''),
- putting aside the tool (24) received by the second Z-rod (20'') on a docking station (28) subsequent to said operating on the fixed tip (22';46') or disposable tip (36),
or to:
- traversing the first and second Z-rods (20',20'') such that the Z-axis (ZA) of the first Z-rod (20') and the working area (WA) of the tool (24), as viewed in longitudinal direction of said first Z-rod (20'), at least partially overlap a target area (TA) comprised by a target (16) operable by means of the tool (24) of the second Z-rod (20''),
- operating on the target (16) by means of the tool (24) of the second Z-rod (20'') and/or by means of the fixed tip (22';46) or the disposable tip (36) of the first Z-rod (20'),
- putting aside the tool (24) received by the second Z-rod (20'') on a docking station (28) subsequent to said operating on the target (16).

13. The pipetting system (10) according to claim 12, wherein the tool (24) comprises a downholding means (30), a piercing means (38) or a receptacle (50).

## Patentansprüche

1. Ein Verfahren zum Betreiben eines Pipettiersystems (10), umfassend einen Arbeitstisch (12), mindestens einen Manipulatorarm (18) und eine Vielzahl von Z-Stangen (20', 20"), die an dem mindestens einen Manipulatorarm (18) angeordnet sind, wobei die Vielzahl von Z-Stangen (20', 20") eine erste Z-Stange (20') und eine zweite Z-Stange (20") umfasst, wobei die erste Z-Stange (20') eine fixierte Spitze (22'; 46') oder eine Einwegspitze (36) umfasst, die an der ersten Z-Stange (20') über ein Verbindungsmerkmal (40') befestigt ist, wobei die erste Z-Stange (20') eine Z-Achse (ZA) umfasst, die entlang einer Mittelachse der fixierten Spitze (22'; 46') oder Einwegspitze (36) definiert ist,
wobei das Verfahren den Schritt umfasst:
- Aufnehmen eines Werkzeugs (24) durch die zweite Z-Stange (20") über einen Adapter (34"), der an der zweiten Z-Stange (20") befestigt ist, wobei das Werkzeug (24) eine Mittelachse (CA) und einen Arbeitsbereich (WA) umfasst, wobei der Arbeitsbereich (WA) durch einen Kreis definiert ist, dessen Mittelpunkt sich auf der Mittelachse (CA) des Werkzeugs (24) befindet und dessen Radius (R) ein Abstand zwischen der Mittelachse (CA) und einer größten Ausdehnung eines Umrisses des Werkzeugs (24) in einer Projektion ist,
und wobei das Verfahren ferner entweder die Schritte umfasst:
- Durchqueren der ersten und zweiten Z-Stange (20', 20") derart, dass der Arbeitsbereich (WA) des Werkzeugs (24) orthogonal von der Z-Achse (ZA) der ersten Z-Stange (20') durchdrungen wird, wenn in Längsrichtung der ersten Z-Stange (20') betrachtet,
- Betreiben der fixierten Spitze (22'; 46') oder Einwegspitze (36) der ersten Z-Stange (20') mittels des Werkzeugs (24) der zweiten Z-Stange (20"),
- Ablegen des Werkzeugs (24), das von der zweiten Z-Stange (20") aufgenommen wird, an einer Andockstation (28) nach dem Betreiben der fixierten Spitze (22'; 46') oder Einwegspitze (36),
oder die Schritte:
- Durchqueren der ersten und zweiten Z-Stange (20', 20") derart, dass die Z-Achse (ZA) der ersten Z-Stange (20') und der Arbeitsbereich (WA) des Werkzeugs (24), wenn in Längsrichtung der ersten Z-Stange (20') betrachtet, mindestens teilweise einen Zielbereich (TA) überlappen, der von einem Ziel (16) umfasst ist, das mittels des Werkzeugs (24) der zweiten Z-Stange (20") betreibbar ist,
- Betreiben des Ziels (16) mittels des Werkzeugs (24) der zweiten Z-Stange (20") und/oder mittels der fixierten Spitze (22'; 46) oder der Einwegspitze (36) der ersten Z-Stange (20'),
- Ablegen des Werkzeugs (24), das von der zweiten Z-Stange (20") aufgenommen wird, an einer Andockstation (28) nach dem Betreiben des Ziels (16).

2. Das Verfahren nach Anspruch 1, wobei das Werkzeug (24) ein Niederhaltemittel (30) ist.

3. Das Verfahren nach Anspruch 2, wobei das Betreiben des Ziels (16) das Anlegen des Ziels (16) von oben mittels des Niederhaltemittels (30) umfasst, um das Ziel (16) in Bezug auf den Arbeitstisch (12) zu fixieren.

4. Das Verfahren nach Anspruch 2 oder 3, wobei das Betreiben des Ziels (16) umfasst:
- Durchstechen einer Membran (43), die von dem Ziel (16) umfasst wird, von oben mittels der fixierten Spitze (22'),
- Einführen der fixierten Spitze (22') mindestens teilweise in das Ziel (16) über das Durchstechen,
- Ansaugen oder Abgeben von Flüssigkeit (45) von bzw. in das Ziel (16) über die fixierte Spitze (22').

5. Das Verfahren nach Anspruch 4, wobei das Betreiben des Ziels (16) Zurückziehen der fixierten Spitze (22') von dem Ziel (16) über das Durchstechen umfasst, während das Ziel (16) weiterhin von oben mittels des Niederhaltemittels (30) angelegt wird.

6. Das Verfahren nach Anspruch 1, wobei das Werkzeug (24) ein Durchstechmittel (38) ist, das eine zentrale Öffnung (44) umfasst.

7. Das Verfahren nach Anspruch 6, wobei das Betreiben des Ziels (16) das Durchstechen einer von dem Ziel (16) umfassten Membran (43) umfasst, , von oben mittels des Durchstechmittels (38), um die Membran (43) mit einer Öffnung zu versehen.

8. Das Verfahren nach Anspruch 7, wobei das Betreiben des Ziels (16) umfasst:
- Einführen der Einwegspitze (36) oder fixierten Spitze (22'; 46') mindestens teilweise in das Ziel (16) über die Öffnung oder über die zentrale Öffnung (44) des Durchstechmittels (38),
- Ansaugen oder Abgeben von Flüssigkeit (45) von bzw. in das Ziel (16) über die Einwegspitze (36) oder fixierte Spitze (22'; 46'),
- Zurückziehen der Einwegspitze (36) oder fixierten Spitze (22', 46') von dem Ziel über die Öffnung oder über die zentrale Öffnung (44) des Durchstechmittels (38).

9. Das Verfahren nach Anspruch 1, wobei das Werkzeug (24) ein Behälter (50) ist, der einen Tropfenfänger (52) umfasst.

10. Das Verfahren nach Anspruch 9, wobei Betreiben der fixierten Spitze (22', 46') oder Einwegspitze (36) der ersten Z-Stange (20') das Durchqueren der zweiten Z-Stange (20") umfasst, um den Tropfenfänger (52) des Behälters (50) unter der fixierten Spitze (22', 46') oder Einwegspitze (36) zu platzieren.

11. Das Verfahren nach Anspruch 10, ferner umfassend das Durchqueren der ersten Z-Stange (20') über den Arbeitstisch (12) und ferner das Durchqueren der zweiten Z-Stange (20") in paralleler Bewegung zur Bewegung der ersten Z-Stange (20'), um den Tropfenfänger (52) des Behälters (50) kontinuierlich unter der fixierten Spitze (22', 46') oder Einwegspitze (36) zu platzieren.

12. Ein Pipettiersystem (10), umfassend einen Arbeitstisch (12), mindestens einen Manipulatorarm (18) und eine Vielzahl von Z-Stangen (20', 20"), die an dem mindestens einen Manipulatorarm (18) angeordnet sind, wobei die Vielzahl von Z-Stangen (20', 20") eine erste Z-Stange (20') und eine zweite Z-Stange (20") umfasst, wobei die erste Z-Stange (20') eine fixierte Spitze (22'; 46') oder eine Einwegspitze (36) umfasst, die an der ersten Z-Stange (20') über ein Verbindungsmerkmal (40') befestigt ist, wobei die erste Z-Stange (20') eine Z-Achse (ZA) umfasst, die entlang einer Mittelachse der fixierten Spitze (22'; 46') oder Einwegspitze (36) definiert ist,
wobei das Pipettiersystem (10) ausgelegt ist zum:
- Aufnehmen eines Werkzeugs (24) durch die zweite Z-Stange (20") über einen Adapter (34"), der an der zweiten Z-Stange (20") befestigt ist, wobei das Werkzeug (24) eine Mittelachse (CA) und einen Arbeitsbereich (WA) umfasst, wobei der Arbeitsbereich (WA) durch einen Kreis definiert ist, dessen Mittelpunkt sich auf der Mittelachse (CA) des Werkzeugs (24) befindet und dessen Radius (R) ein Abstand zwischen der Mittelachse (CA) und einer größten Ausdehnung eines Umrisses des Werkzeugs (24) in einer Projektion ist,
und wobei das Pipettiersystem (10) ferner ausgelegt ist zum entweder:
- Durchqueren der ersten und zweiten Z-Stange (20', 20") derart, dass der Arbeitsbereich (WA) des Werkzeugs (24) orthogonal von der Z-Achse (ZA) der ersten Z-Stange (20') durchdrungen wird, wenn in Längsrichtung der ersten Z-Stange (20') betrachtet,
- Betreiben der fixierten Spitze (22'; 46') oder Einwegspitze (36) der ersten Z-Stange (20') mittels des Werkzeugs (24) der zweiten Z-Stange (20"),
- Ablegen des Werkzeugs (24), das von der zweiten Z-Stange (20") aufgenommen wird, an einer Andockstation (28) nach dem Betreiben der fixierten Spitze (22'; 46') oder Einwegspitze (36),
oder zum:
- Durchqueren der ersten und zweiten Z-Stange (20', 20") derart, dass die Z-Achse (ZA) der ersten Z-Stange (20') und der Arbeitsbereich (WA) des Werkzeugs (24), wenn in Längsrichtung der ersten Z-Stange (20') betrachtet, mindestens teilweise einen Zielbereich (TA) überlappen, der von einem Ziel (16) umfasst ist, das mittels des Werkzeugs (24) der zweiten Z-Stange (20") betreibbar ist,
- Betreiben des Ziels (16) mittels des Werkzeugs (24) der zweiten Z-Stange (20") und/oder mittels der fixierten Spitze (22'; 46) oder der Einwegspitze (36) der ersten Z-Stange (20'),
- Ablegen des Werkzeugs (24), das von der zweiten Z-Stange (20") aufgenommen wird, an einer Andockstation (28) nach dem Betreiben des Ziels (16).

13. Das Pipettiersystem (10) nach Anspruch 12, wobei das Werkzeug (24) ein Niederhaltemittel (30), ein Durchstechmittel (38) oder einen Behälter (50) umfasst.

## Revendications

1. Un procédé de fonctionnement d'un système de pipetage (10) comprenant une table de travail (12), au moins un bras manipulateur (18) et une pluralité de tiges en Z (20', 20") agencées sur l'au moins un bras manipulateur (18), ladite pluralité de tiges en Z (20', 20") comprenant une première tige en Z (20') et une seconde tige en Z (20"), ladite première tige en Z (20') comprenant une pointe fixe (22' ; 46') ou une pointe jetable (36) fixée à ladite première tige en Z (20') par l'intermédiaire d'un élément de raccordement (40'), dans lequel la première tige en Z (20') comprend un axe Z (ZA) défini le long d'un axe central de la pointe fixe (22' ; 46') ou de la pointe jetable (36), ledit procédé comprenant l'étape de :
- recevoir par ladite seconde tige en Z (20") un outil (24) par l'intermédiaire d'un adaptateur (34") fixé à ladite seconde tige en Z (20"), dans lequel ledit outil (24) comprend un axe central (CA) et une zone de travail (WA), ladite zone de travail (WA) étant définie par un cercle dont le centre est situé sur l'axe central (CA) dudit outil (24) et dont le rayon (R) est une distance entre ledit axe central (CA) et une extension la plus grande d'un contour de l'outil (24) dans une projection,
et ledit procédé comprenant soit les étapes de :
- traverser les première et seconde tiges en Z (20', 20") de sorte que la zone de travail (WA) de l'outil (24) est pénétrée orthogonalement par l'axe Z (ZA) de la première tige en Z (20'), comme observé dans la direction longitudinale de ladite première tige en Z (20'),
- fonctionner sur la pointe fixe (22' ; 46') ou la pointe jetable (36) de la première tige en Z (20') au moyen de l'outil (24) de la seconde tige en Z (20"),
- mettre de côté l'outil (24) reçu par la seconde tige en Z (20") sur une station d'accueil (28) à la suite dudit fonctionnement sur la pointe fixe (22' ; 46') ou la pointe jetable (36),
soit les étapes de :
- traverser les première et seconde tiges en Z (20', 20") de sorte que l'axe Z (ZA) de la première tige en Z (20') et la zone de travail (WA) de l'outil (24), comme observé dans la direction longitudinale de ladite première tige en Z (20'), chevauchent au moins partiellement une zone cible (TA) comprise par une cible (16) pouvant fonctionner au moyen de l'outil (24) de la seconde tige en Z (20"),
- fonctionner sur la cible (16) au moyen de l'outil (24) de la seconde tige en Z (20") et/ou au moyen de la pointe fixe (22' ; 46) ou de la pointe jetable (36) de la première tige en Z (20'),
- mettre de côté l'outil (24) reçu par la seconde tige en Z (20") sur une station d'accueil (28) à la suite dudit fonctionnement sur la cible (16).

2. Le procédé selon la revendication 1, dans lequel l'outil (24) est un moyen de maintien vers le bas (30).

3. Le procédé selon la revendication 2, dans lequel le fonctionnement sur la cible (16) comprend la mise en butée de la cible (16) par le dessus au moyen du moyen de maintien vers le bas (30) de manière à fixer la cible (16) par rapport à la table de travail (12).

4. Le procédé selon la revendication 2 ou 3, dans lequel le fonctionnement sur la cible (16) comprend :
- le perçage d'une membrane (43) comprise par la cible (16) par le dessus au moyen de la pointe fixe (22'),
- l'introduction de la pointe fixe (22') au moins partiellement dans la cible (16) via le perçage,
- l'aspiration ou la distribution de liquide (45) depuis ou plutôt dans la cible (16) via la pointe fixe (22').

5. Le procédé selon la revendication 4, dans lequel le fonctionnement sur la cible (16) comprend le retrait de la pointe fixe (22') de la cible (16) via le perçage tout en mettant encore en butée la cible (16) par le dessus au moyen du moyen de maintien vers le bas (30).

6. Le procédé selon la revendication 1, dans lequel l'outil (24) est un moyen de perçage (38) comprenant une ouverture centrale (44).

7. Le procédé selon la revendication 6, dans lequel le fonctionnement sur la cible (16) comprend le perçage d'une membrane (43) comprise par la cible (16) par le dessus au moyen du moyen de perçage (38) de manière à doter la membrane (43) d'une ouverture.

8. Le procédé selon la revendication 7, dans lequel le fonctionnement sur la cible (16) comprend :
- l'introduction de la pointe jetable (36) ou de la pointe fixe (22' ; 46') au moins partiellement dans la cible (16) via l'ouverture ou via l'ouverture centrale (44) du moyen de perçage (38),
- l'aspiration ou la distribution de liquide (45) depuis ou plutôt dans la cible (16) via la pointe jetable (36) ou la pointe fixe (22' ; 46'),
- le retrait de la pointe jetable (36) ou de la pointe fixe (22' ; 46') de la cible via l'ouverture ou via l'ouverture centrale (44) du moyen de perçage (38).

9. Le procédé selon la revendication 1, dans lequel l'outil (24) est un réceptacle (50) comprenant un collecteur de gouttes (52).

10. Le procédé selon la revendication 9, dans lequel le fonctionnement sur la pointe fixe (22' ; 46') ou la pointe jetable (36) de la première tige en Z (20') comprend la traversée de la seconde tige en Z (20") de manière à placer le collecteur de gouttes (52) du réceptacle (50) sous la pointe fixe (22' ; 46') ou la pointe jetable (36).

11. Le procédé selon la revendication 10, comprenant en outre le passage de la première tige en Z (20') à travers la table de travail (12) et en outre la traversée de la seconde tige en Z (20") en mouvement parallèle au mouvement de la première tige en Z (20') de manière à placer en continu le collecteur de gouttes (52) du réceptacle (50) sous la pointe fixe (22' ; 46') ou la pointe jetable (36).

12. Un système de pipetage (10) comprenant une table de travail (12), au moins un bras manipulateur (18) et une pluralité de tiges en Z (20', 20") agencées sur l'au moins un bras manipulateur (18), ladite pluralité de tiges en Z (20', 20") comprenant une première tige en Z (20') et une seconde tige en Z (20"), ladite première tige en Z (20') comprenant une pointe fixe (22' ; 46') ou une pointe jetable (36) fixée à ladite première tige en Z (20') par l'intermédiaire d'un élément de raccordement (40'), dans lequel la première tige en Z (20') comprend un axe Z (ZA) défini le long d'un axe central de la pointe fixe (22' ; 46') ou de la pointe jetable (36),
dans lequel le système de pipetage (10) est adapté pour :
- recevoir par ladite seconde tige en Z (20") un outil (24) par l'intermédiaire d'un adaptateur (34") fixé à ladite seconde tige en Z (20"), dans lequel ledit outil (24) comprend un axe central (CA) et une zone de travail (WA), ladite zone de travail (WA) étant définie par un cercle dont le centre est situé sur l'axe central (CA) dudit outil (24) et dont rayon (R) est une distance entre ledit axe central (CA) et une extension la plus grande d'un contour de l'outil (24) dans une projection,
et dans lequel le système de pipetage (10) est en outre adapté pour :
- traverser les première et seconde tiges en Z (20', 20") de sorte que la zone de travail (WA) de l'outil (24) est pénétrée orthogonalement par l'axe Z (ZA) de la première tige en Z (20'), comme observé dans la direction longitudinale de ladite première tige en Z (20'),
- fonctionner sur la pointe fixe (22' ; 46') ou la pointe jetable (36) de la première tige en Z (20') au moyen de l'outil (24) de la seconde tige en Z (20"),
- mettre de côté l'outil (24) reçu par la seconde tige en Z (20") sur une station d'accueil (28) à la suite dudit fonctionnement sur la pointe fixe (22' ; 46') ou la pointe jetable (36),
ou pour :
- traverser les première et seconde tiges en Z (20', 20") de sorte que l'axe Z (ZA) de la première tige en Z (20') et la zone de travail (WA) de l'outil (24), comme observé dans la direction longitudinale de ladite première tige en Z (20'), chevauchent au moins partiellement une zone cible (TA) comprise par une cible (16) pouvant fonctionner au moyen de l'outil (24) de la seconde tige en Z (20"),
- fonctionner sur la cible (16) au moyen de l'outil (24) de la seconde tige en Z (20") et/ou au moyen de la pointe fixe (22' ; 46) ou de la pointe jetable (36) de la première tige en Z (20'),
- mettre de côté l'outil (24) reçu par la seconde tige en Z (20") sur une station d'accueil (28) à la suite dudit fonctionnement sur la cible (16).

13. Le système de pipetage (10) selon la revendication 12, dans lequel l'outil (24) comprend un moyen de maintien vers le bas (30), un moyen de perçage (38) ou un réceptacle (50) .
